Europäisches Patentamt

European Patent Office

Office européen des brevets

(19)

(11) Veröffentlichungsnummer : **0 099 999**
**B1**

## (12) EUROPÄISCHE PATENTSCHRIFT

(45) Veröffentlichungstag der Patentschrift :
09.09.87

(51) Int. Cl.⁴ : **B 29 D 23/00**

(21) Anmeldenummer : **83106486.0**

(22) Anmeldetag : **02.07.83**

(54) Verfahren zur Herstellung eines verstärkten Schlauchs.

(30) Priorität : 21.07.82 DE 3227166

(43) Veröffentlichungstag der Anmeldung :
08.02.84 Patentblatt 84/06

(45) Bekanntmachung des Hinweises auf die Patenterteilung : 09.09.87 Patentblatt 87/37

(84) Benannte Vertragsstaaten :
FR GB IT

(56) Entgegenhaltungen :
DE-A- 2 261 126
GB-A- 2 052 360
US-A- 2 491 152

(73) Patentinhaber : Vohrer, Christoph
Hattsteiner Strasse 22
D-6240 Königstein 2 (DE)

(72) Erfinder : Vohrer, Christoph
Hattsteiner Strasse 22
D-6240 Königstein 2 (DE)

(74) Vertreter : Schubert, Siegmar, Dipl.-Ing. et al
Patentanwälte Dr. V. Schmied-Kowarzik Dr. P. Weinhold Dr.-Ing. G. Dannenberg Dr. D. Gudel Dipl.-Ing. S.
Schubert Dr. P. Barz Grosse Eschenheimer Strasse
39
D-6000 Frankfurt am Main 1 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

EP 0 099 999 B1

## Beschreibung

Die Erfindung betrifft ein Verfahren zur Herstellung eines verstärkten Schlauchs nach dem Oberbegriff des Anspruchs 1.

Bei dünnwandigen und deswegen leichten und flexiblen verstärkten Schläuchen werden vorzugsweise über dem dünnen Innenschlauch am gesamten Umfang im wesentlichen in der Achsrichtung verlaufende Verstärkungselemente aufgebracht (DE-OS 2 261 126). Über die Verstärkungselemente sind Drahtwendeln und parallel zu ihnen ein Band aus relativ hartem thermoplastischem bzw. elastomerem Material gewickelt. Innenschlauch, Band und Außenschlauch sind fest miteinander verbunden. Die Verstärkungselemente bestehen aus mit Textilfäden verstärkten Bändchen aus PVC (DE-OS 1 629 830). Diese PVC-Bändchen können mit den anderen PVC-Bestandteilen des Schlauches verbunden werden, so daß die Bändchen als geschlossene Lage in der Schlauchwandung erscheinen. — Die Fertigung dieser Schläuche ist nur dann unproblematisch, wenn diese auf einem Produktionsdorn erfolgt, über den der Innenschlauch extrudiert wird, da dieser Produktionsdorn ohne weiteres die Wickelspannungen aufnehmen kann, welche die steifen Verstärkungsbänder bzw. Drahtwendel erzeugen.

Um die bekannten Nachteile der Produktionsdorne, die auch als Produktionshilfsdorne bezeichnet werden, zu vermeiden, ist es bereits bekannt, zur kontinuierlichen Herstellung eines dünnwandigen Schlauches mit wendelförmiger Bewehrung, die an der an ihrem Umfang geführten unter Innendruck stehenden Schlauchseele nach dem Verlassen einer Führung zugeführt wird, wobei kontinuierlich mehrere Windungen der Bewehrung auf der Führung angesammelt werden, durch intermittierenden Druck in axialer Richtung gegen die jeweils letztere Windung die jeweils vorderste Windung der Schlauchseele zuzuführen (DE-AS 2 700 056). — Dabei hat es sich aber gezeigt, daß schon geringere Schwankungen des Innendrucks des Innenschlauchs sich nachteilig auf die Regelmäßigkeit der Windungen auswirken können. Deswegen ist eine aufwendige Druckregulierung erforderlich.

Neben der Aufnahme der Wickelspannungen durch den Innenschlauch besteht eine weiteres Problem in der Verklebung von Innenschlauch, gegebenenfalls vorhandener Stützwendel und Außenschlauch. Diese Verklebung erfolgt in der Regel durch Aktivierung eines Klebers unter Zuführung von Wärme. Dies gilt beispielsweise für einen flexiblen bewehrten Kunststoffschlauch mit einem Innen- und einem Außenschlauch aus plastomerem oder elastomerem Material und einem zwischen Innen- und Außenschlauch wendelförmig mit axialem Abstand verlaufenden Verstärkungsband aus relativ hartem Material auch dann, wenn das Verstärkungsband mit einer Ummantelung aus einem relativ weichen relativ weichen plastomeren oder elastomeren Material versehen ist und die Ummantelung mit dem Innenschlauch und mit dem Außenschlauch fest verbunden ist (DE-OS 3 017 326). Dabei kann der Innenschlauch auf seiner Außenseite mit im wesentlichen axial verlaufenden Verstärkungselementen, vorzugsweise Textilfäden versehen sein und das ummantelte Verstärkungsband kann darüber mit dem Innenschlauch verklebt sein. Als Verstärkungselemente können auch hier mit Textilfäden verstärkte PVC-Bändchen verwendet werden. — Bei dem Verkleben von Innenschlauch, Stützwendel und Außenschlauch hat jedoch eine zu hohe Temperatur zur Reaktivierung des Klebers, der auf dem Innenschlauch oder auf dem Stützwendel aufgetragen sein kann, die nachteilige Folge, daß der Innenschlauch unter dem Innendruck sich zwischen die Windungen der Stützwendel drückt, plastisch verformen und im äußersten Fall sogar platzen kann. Der fertige Schlauch zeigt somit bleibende Ausbeulungen und eine rauhe Innenwandung. Anderseits darf die Temperatur zum Verkleben nicht zu gering sein, da sonst keine ausreichende Haftung zwischen Innenschlauch, Stützwendel und Außenschlauch erreicht wird. Wenn, um die vorstehenden Schwierigkeiten zu steuern, ein Kleber verwendet wird, der schon bei relativ niedrigen Temperaturen durch Reaktivierung klebfähig wird, darf auch der fertige Schlauch später nicht bei höheren Temperaturen verwendet werden. Hieraus ergibt sich eine wesentliche Einschränkung der bräuchbaren Anwendung solcher Schläuche, die somit nicht langzeitig heißes Wasser führen dürfen.

Zum Stand der Technik gehört ferner ein Verfahren zum Herstellen eines Verbundschlauches aus einem Gewebeschlauch mit einem Innenschlauch aus Gummi oder Kunststoff, bei dem der Innenmantel mit Kleber beschichtet und dem Gewebeschlauch im Zuge von dessen Webvorgang kontinuierlich zugeführt sowie in dem gewebeschlauch mitgeführt wird. Der so gebildete Schlauchrohling wird zur Aktivierung des Klebers über eine Heizstrecke beheizt. Der Innenschlauch wird während des Heizvorgangs mit Innendruck beaufschlagt, so auf den vollen Schlauchquerschnitt aufgeweitet und anschließend druckentlastet (DE-OS 2 121 146). — Diese Fertigung ist jedoch wegen des Webvorgangs des Gewebeschlauchs verhältnismäßig langsam und aufwendig. Außerdem trägt der Gewebeschlauch erheblich auf, so daß die Schlauchwandung relativ dick ist und die gewünschte Faltenbildung verhindert. Für einen weiteren Schlauchaufbau wäre eine weitere klebebeschichtung notwendig.

Es ist bereits ein Verfahren nach dem Oberbegriff des Anspruchs 1 zur Herstellung eines verstärkten Schlauchs bekannt, bei dem ein vorgefertigter dünnwandiger Innenschlauch mit einem thermoplastischen Kleber sowie einer gewebten Textilverstärkung versehen wird und einem ausreichenden Innendruck von beispielsweise 1,4 bis 4,2 bar ausgesetzt wird, bevor auf den Innenschlauch eine äußere Ummantelung aus einem Elastomer extrudiert wird (GB-A-2 052 360). Durch die bei der Extrusion auf den Schlauch einwirkende Wärme wird der Innenschlauch mit der Textilverstärkung bei ausreichendem Innendruck verklebt. Der Innendruck soll somit so groß sein, daß in Verbindung mit dem durch die Extrusion der Ummantelung ausgeübten Druck die Schlauchbestandteile sicher aneinander gedrückt werden. — Da der im wesentlichen konstante Innendruck relativ groß ist, muß die Textilverstärkung eng gewebt werden, damit der Innenschlauch nicht durch die Maschen gedrückt wird. Deswegen können sich die gleichen Nachteile einstellen wie nach dem voranstehend beschriebenen bekannten Verfahren, insbesondere ein aufwendiger Webvorgang und ein damit erzeugtes relativ starkes Gewebe, welches die gewünschte Flexibilität des verstärkten Schlauches zwangsläufig einschränkt.

Zu der vorliegenden Erfindung gehört daher die Aufgabe, einen verstärkten Schlauch ohne Verwendung eines festen produktionsdorns rasch herzustellen und den Innenschlauch so zu verstärken, daß ein auf diesem aufbauender druckfester verstärkter Schlauch im Bedarfsfall leicht und flexibel bleibt, der aber erforderlichenfalls auch besonders widerstandsfähig bewehrt werden kann.

Diese Aufgabe wird gemäß der Erfindung durch die in dem kennzeichnenden Teil des Anspruchs 1 angegebenen Merkmale gelöst.

Unter dem verwendeten dünnwandigen Innenschlauch wird hier ein Schlauch aus thermoplastischem oder elastomerem Material verstanden, dessen Wandstärke 0,3 bis 0,5 mm beträgt. Auf diesen unter einem zunächst niedrigen Innendruck von etwa 0,5 bis 1 bar aufgeweiteten Innenschlauch werden zunächst die Bändchen in axialer Richtung und wendelförmig aufgebracht. Sie werden sofort unter Wärmeeinwirkung mit dem Innenschlauch bzw. mit der ersten Lage des Bändchens verbunden. Damit entsteht zunächst ein verstärkter Innenschlauch, der größeren Innendrücken von bis zu 20 bar anstatt eines Produktionshilfsdorns standzuhalten vermag. Deswegen kann auf diesen mit großem Innendruck beaufschlagten verstärkten Innenschlauch, falls gewünscht, eine besonders widerstandsfähige Bewehrung wie Stützwendel in Form von steifen Bändern oder Drähten aufgebracht werden. Statt der Bewehrung kann auf den verstärkten Innenschlauch auch unmittelbar der Außenschlauch extrudiert werden. Der Innendruck des verstärkten Innenschlauchs kann als Stützdruck bis zu 20 bar betragen. Es ist nicht erforderlich, aber gleichwohl möglich, den Stützwendel möglichst zugentlastet auf den verstärkten Innenschlauch aufzubringen.

Als Bändchen zur Verstärkung des Innenschlauchs können solche verwendet werden, die aus PVC bestehen und über ihre gesamte Breite hinweg mit feinverteilten eingebetteten Textilfasern versehen sind. Diese Bändchen können beidseitig mit Klebern, vorzugsweise Lösungsmittelklebern, dünn beschichtet sein. Es entfällt damit in vorteilhafter Weise eine Beschichtung des Innenschlauchs zur nachfolgenden Festlegung des gegebenenfalls vorgesehenen Stützwendels oder des Außenschlauchs.

Statt der mit Kleber beschichteten Bändchen können in besonders vorteilhafter Weise Bändchen verwendet werden, in denen das unverdrillte Garn anstatt durch PVC-Paste durch einen erhitzten hochviskosen Schmelzkleber vorzugsweise auf Co-Polymidbasis geführt und beschichtet wird. Anschließend wird dieses beschichtete Garn durch Walzen zu den Bändchen flachgewalzt. Die Bändchen weisen ohne weitere Beschichtung die erwünschten Klebeeingenschaften auf, nämlich eine Klebefähigkeit zwischen 130-150 °C, wobei die Verklebung in dem Temperaturbereich von 100-110 °C fest wird.

Die Bändchen haben vorzugsweise eine Breite von ca. 3 mm und eine Dicke von 0,05-0,1 mm. Sie sind möglichst weich und flexibel, damit sie die Faltenbildung mit Innenschlauch und Außenschlauch nicht behindern.

Die in Achsrichtung abgezogenen Bändchen transportieren somit den extrudierten dünnwandigen Innenschlauch, indem dieser sich durch Aufweiten unter Druck an die bei der Extrusionstemperatur klebefähigen Bändchen anschmiegt und sich mit diesen verbindet. Diese in Achsrichtung parallel verlaufenden Bändchen, die sich im besten Fall sogar überlappen können, verstärken den Innenschlauch soweit, daß dieser mit geringerem Innendruck· Wickelspannungen standhält, wodurch es möglich wird, eine weitere Lage des gleichen Bändchens wendelförmig darüber zu wickeln. Dieser durch diese Bändchen axial und wendelförmig verstärkte Innenschlauch hält nunmehr so großen Drücken und Temperaturen stand, daß das weitere Aufbringen von Schauchbewehrungen in Form von starren Stützwendeln unproblematisch wird und auf Stützdorne verzichtet werden kann. Die Bändchenlagen wirken zwischen Innenschlauch und weiterem Schlauchaufbau als Haftvermittler, der bei den nun möglichen hohen Temperaturen problemlos aktiviert werden kann.

Ein besonders widerstandsfähiger verstärkter Innenschlauch zur Herstellung des vertärkten gesamtschlauchs wird nach Anspruch 2 hergestellt. Auf den mit einem Bändchen in axialer Richtung verstärkten Innenschlauch werden zur weiteren Verstärkung Bändchen in einer Umfangsrichtung und in einer darin gegenläufigen Umfangsrichtung wendelförmig gewickelt. Damit wird mit Sicherheit eine Verwindung des Innenschlauchs durch den vorgesehenen Innendruck vermieden. Der derart versärkte Innenschlauch kann daher anschließend problemlos mit hohem Innendruck zum Aufwickeln der Stützwendel beaufschlagt werden, erhitzt werden und schließlich mit dem extrudierten Außenschlauch versehen werden.

Vorzugsweise wird der Temperaturbereich, in dem der zur Herstellung oder zur Beschichtung des Bändchens verwendete Kleber klebefähig ist, auf die Austrittstemperatur des Innenschlauchs aus der Extrusionsdüse abgestimmt. Hierzu wird vorzugsweise ein Kleber verwendet, dessen Temperatur der Klebefähigkeit oder Klebewirkung in dem Bereich zwischen 130-150 °C liegt.

Vorzugsweise wird die Klebefestigkeit dieser Klebers bei 110 °C erreicht.

Zur Herstellung eines verstärkten Schlauchs, dessen mit den Bändchen verstärkter Innenschlauch mit einem Außenschlauch nach Anspruch 7 ummantelung vorteilhaft durch Extrusion einer dünnen Schicht von 0,2-0,3 mm aus PVC. Dieser Kunststoff verbindet sich gut mit der äußersten Lage der Bändchen des verstärkten Innenschlauchs, da die Extrusionstemperatur über dem Schmelzpunkt des gemäß voranstehenden bevorzugten Spezifikationen verwendeten Klebers auf dem Bändchen liegt. Damit erhält man einen sehr leichten, aber äußerst druckfesten verbundschlauch, der bei größerem Durchmesser zum Transport und zur Lagerhaltung flachgelegt und damit platzsparend aufgewickelt werden kann. Bei dickerer Wandstärke des Außenschlauchs kann aber der Schlauchquerschnitt auch bei Biegebeanspruchung rund bleiben.

Ein leichter, aber gegen Druck und Biegebeanspruchung besonders widerstandsfähiger verstärker Schlauch kann ohne Verwendung eines Hilfsdorns mit einem Stützwendel aus verhältnismäßig steifem Material nach Anspruch 8 hergestellt werden. In vorteilhafter Weise braucht dabei auf den mit den Bändchen verstärkten Innenschlauch kein weiterer Haftvermittler aufgetragen zu werden, da die Bändchen selbst klebefähig sind und als Haftvermittler fungieren.

Die Bändchen können auch zur Verbindung der Stützwendel mit einem darüber extrudierten Außenschlauch nach Anspruch 9 genutzt werden. Durch den Außenschlauch als Ummantelung über der Stützwendel wird der Schlauch gegen äußere Einwirkungen zusätzlich geschützt und die Oberfläche glatt gestaltet.

Eine weitere Verstärkung des Schlauchs kann vorteilhaft durch die gleichen wie voranstehend gekennzeichneten Bändchen erzielt werden, indem diese nach Anspruch 10 in axialer Richtung auf die Stützwendel vor der Extrusion des Außenschlauchs aufgebracht und mit der Stützwendel — ohne Verwendung eines zusätzlichen Haftvermittlers — verbunden werden. Vorteilhaft läßt man diese zusätzlichen Bändchen in axialer Richtung vor dem zur Extrusion verwendeten Querspritzkopf, mit dem die Ummantelung erfolgt, auf den mit der Stützwendel versehenen und verstärkten Innenschlauch auflaufen. Die textilverstärkten Bändchen dienen hier wiederum als Haftvermittler zwischen Stützwendel und Außenschlauch, um deren Verbindung zu verbessern. Außerdem fangen die Bändchen Kräfte beim Dehnen und Stauchen des Schlauchs infolge von Biegung ab und verhindern dadurch ein Reißen im Bereich der Faltenbildung. Zusätzlich wird der Schutz gegen äußere mechanische Beschädigungen verbessert.

Die Faltenbildung nach innen, also zwischen die Windungen der Stützwendel, ist zwangsläufig, weil der Außenschlauch in der Regel so aufgebracht wird, daß ein Unterdruck im Ummantelungsspritzkopf angesetzt wird. Er bewirkt, daß der Außenschlauch sich an den bisherigen Schlauchaufbau anschmiegt.

Diese Faltenbildung nach innen hat wiederum die Folge, daß der Abstand (Spielraum) zwischen den Stützwendeln um mindestens die zweifache Wandstärke des Außenschlauchs verringert wird und dadurch der Biegeradius des Schlauchs erheblich vergrößert wird, die Flexibilität also leidet.

Die nach Anspruch 11 straff aufgelaufenen Bändchen verhindern, daß der plastische Außenschlauch unter Einwirkung des notwendigen Vakuums zwischen die Stützwendeln eingezogen wird. Der Zwischenraum zwischen den Stützwendeln bleibt frei, die Faltenbildung bei Biegung des Schlauches geschieht zwangsläufig nach außen. Der fertige Schlauch hat einen sehr kleinen Biegeradius und ist daher hochfelxibel.

Der Hohlraum wird durch Windungsabstand und Höhe der Stützwendeln, den verstärkten Innenschlauch und den Straff über der Wendel liegenden mit Bändchen verstärkten Außenschlauch definiert.

Der so definierte und nach allen Seiten geschützte wendelförmige Hohlraum kann als zusätzlicher Leiter im Schlauch für sonstige flüssige oder gasförmige Medien genutzt werden.

Der gemäß den voranstehenden Verfahren ausgebildete Schlauchverbund weist also zahlreiche Vorteile auf. Insbesondere kann der Schlauch besonders hitzebeständig sein, da Kleber eingesetzt werden können, die erst bei höheren Temperaturen reaktivieren.

Bei der Herstellung dieses Schlauchverbunds besteht praktisch keine Gefahr, daß der Innenschlauch infolge des Innendrucks platzt, wodurch die kontinuierliche Fertigung unterbrochen würde.

Die Erfindung wird im folgenden anhand der Zeichnungen näher erläutert. Es zeigen :

Figur 1   eine Vorrichtung zur Ausübung des Verfahrens,

Figur 2   einen Schlauchverbund eines mit der Vorrichtung nach Figur 1 hergestellten Schlauchs,

Figur 3   eine Variante des Schlauchverbunds,

Figur 4   eine Einzelheit des Schlauchverbunds nach Figur 2, nämlich die Anordnung der Bändchen in Längsrichtung auf dem Stützwendel bei geradem Schlauch und

Figur 5   den Schlauchausschnitt nach Figur 4, jedoch im gebogenen Zustand des Schlauchs.

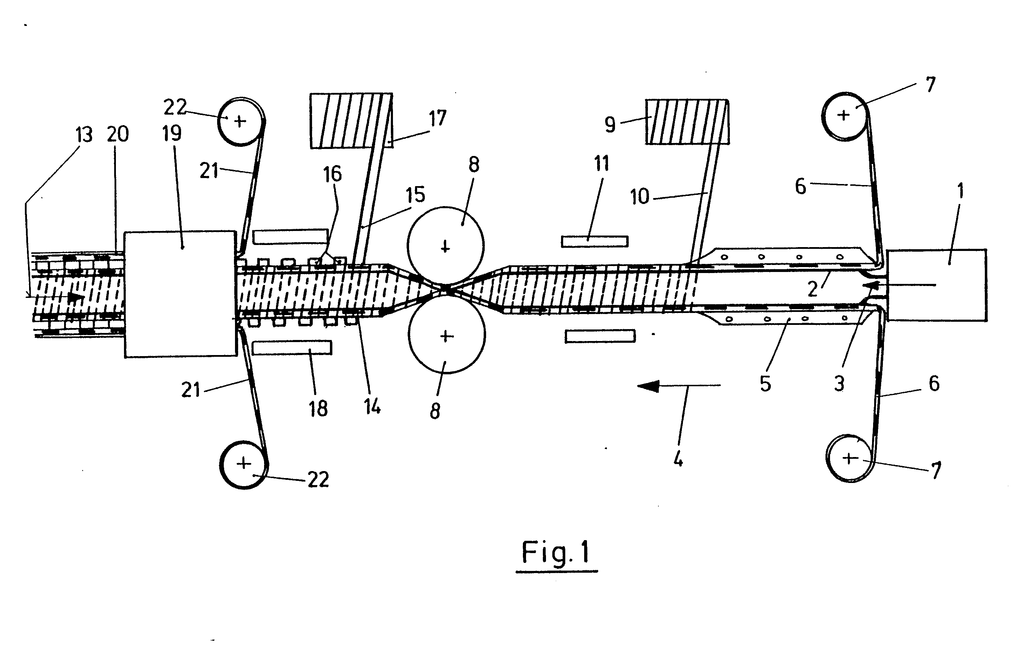

In Figur 1 ist mit 1 eine Extrusionsdüse bezeichnet, aus der ein Innenschlauch 2 aus PVC mit einer Wandstärke von 0,3-0,5 mm extrudiert wird. Der Innenschlauch 2, der durch die Extrusionsdüse mit einem mit dem Pfeil 3 angedeuteten Innendruck beaufschlagt wird, gelangt in Produktionssrichtung — Pfeil 4 — zunächst in ein Rohr 5 und wird gegen dessen Innenwand aufgeweitet. Vor dem Einlauf in das Rohr werden an den Innenschlauch in axialer Richtung, d. h. parallel zur Transportrichtung, textilverstärkte Bändchen 6 aus einem Schmelzkleber herangeführt. Hierzu werden die Bändchen von Vorratsrollen 7, die konzentrisch um das Rohr 5 angeordnet sind, abgezogen.

Transportiert wird der Innenschlauch mit den Bändchen in produktionsrichtung 4 durch Abzugs- und Quetschwalzen 8.

Die Abzugs- und Quetschwalzen quetschen zugleich den Innenschlauch mit den auf ihnen angebrachten Bändchen flach und bilden so eine Abdichtung zum Aufbau der Innendrücke.

Der mit dem Innendruck beaufschlagte Innenschlauch wird zusammen mit den in axialer Richtung verlaufenden Bändchen 6 innen an das Rohr 5 gedrückt und geht mit den Bändchen sofort eine enge Verbindung ein, da die Temperatur des Innenschlauchs beim Austritt aus der Extrusionsdüse 1 die Klebefähigkeit der bändchen 6 aktiviert.

Das Rohr 5 dient gleichzeitig als Außenkalibrierung und Bügelzone, in der die Bädchen 6 auf den Innenschlauch 2 aufgebügelt werden. Sie kühlt außerdem den Innenschlauch 2 soweit ab, daß die Verbindung zwischen den Bändchen und dem Innenschlauch fest wird. Außerdem kann in das Rohrinnere Luft eingeblasen werden, um durch ein Gleitpolster die Reibung zwischen den bändchen 6 und der Innenfläche des Rohrs 5 zu vermindern.

Die in dem Rohr 5 mit dem Innenschlauch 2 verbundenen, in Achsrichtung des Rohres verlaufenden Bändchen 6 können die Oberfläche des Innenschlauchs abdecken und können sich an den Rändern sogar etwas überlappen. Damit hält der mit den Bändchen in Längsrichtung verstärkte Innenschlauch auch nach seinem Austritt aus dem Rohr den begrenzten Innendruck von 0,5 bis etwa 1 bar aus. Der Innendruck ermöglicht es, auf den mit den Bändchen 6 in Längsrichtung verstärkten Innenschlauch 2 mindestens ein weiteres Bändchen 10 in Umfangsrichtung wendelförmig auf die axiale Bändchenschicht des Innenschlauchs aufzuwickeln, sobald der Innenschlauch das Rohr 5 verlassen hat. Infolge des Innendrucks wird dabei der Innenschlauch nicht eingeschnürt. Die Einrichtung zur Aufbringung des Bändchens 10 in Wendelform ist mit 9 bezeichnet.

Im Anschluß an das Aufwickeln des Bändchens 10 in Wendelform durchläuft der Innenschlauch eine erste Heizzone 11, in der das ebenfalls aus Schmelzkleber hergestellte textilverstärkte Bändchen 10 sich fest mit den Bändchen 6 verbindet.

Nach Durchlaufen der Abzugs- und Quetzchwalzen 8 wird der mit den Bändchen 6 und 10 verstärkte Innenschlauch 2 von der Aufwickelseite her mit einem verstärkten Innendruck beaufschlagt, der mit dem Pfeil 13 angedeutet ist. Der Innendruck kann dabei bis 20 bar betragen. Er pflanzt sich bis zu den wiederum einen Abschluß bildenden Abzugs- und Quetschwalzen 8 fort.

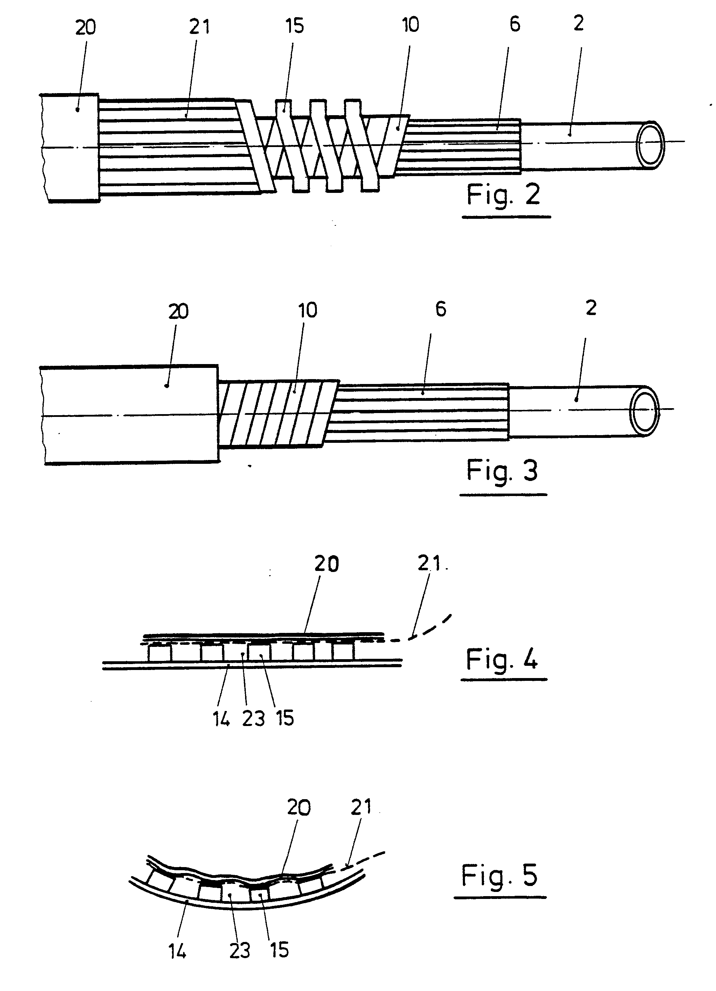

In Transportrichtung im Anschluß an die Abzugs- und Quetschwalzen 8 wird auf den verstärkten Innenschlauch 14 eine Stützwendel 15 mit Windungsabständen 16 aufgewickelt. Durch diese Art des Wickelns der Stützwendel 15 wird ein wendelförmiger Hohlraum 23 gebildet (vgl. Figuren 4 und 5). Die Stützwendel 15 wird aus einem Kunststoffband mit vorzugsweise rechteckförmigem Querschnitt gebildet, welches von einer Wickeleinrichtung 17 aus den unter Innendruck stehenden verstärkten Innenschlauch gewickelt wird. Der durch den hohen Innendruck gestützte verstärkte Innenschlauch hält dabei die Wickelspannung der Wickeleinrichtung 17 ohne unzulässige Deformation aus, so daß azuf aufwendige Mittel zur Zugentlastung verzichtet werden kann.

Der mit der Stützwendel 15 bewehrte und mit den Bändchen 10 und 6 verstärkte Innenschlauch durchläuft nun eine zweite Heizzone 18. In ihr wird die Klebewirkung des Materials der Bändchen soweit aktiviert, daß sich die Stützwendel fest mit den Bändchen verbindet, ohne daß es hierzu eines Auftrags eines Haftungsmittels auf dem verstärkten Innenschlauch oder der Stützwendel bedarf.

Zur Ummantelung des verstärkten und bewehrten Innenschlauchs durchläuft dieser in Produktionsrichtung einen Querspritzkopf mit der Extrusionsdüse 19. Die Innenseite des damit gebildeten Außenschlauchs 20 wird durch weitere Bändchen 21 verstärkt, die von Vorratsrollen 22 abgezogen und in axialer Richtung auf den bewehrten Innenschlauch aufgebracht werden, indem sie über der Bewehrung in die Extrusionsdüse 19 einlaufen.

Werden die Bändchen 21 straff auf die Stützwendel 15 aufgebracht, so daß sie im gestreckten, Zustand des Schlauches nicht durchhängen (siehe Längsschnitt durch die Schlauchwand gemäß Figur 4), so erfolgt im Falle einer Biegung des Schlauches eine Faltenbildung nach außen, vergleiche Figur 5.

Werden jedoch die Bändchen 21 praktisch ohne Spannung, d. h. locker auf die Stützwendel aufgebracht, bevor sie mit dieser verbunden werden, so erfolgt im Falle einer Krümmung eine Faltenbildung nach innen.

In jedem Fall wird durch die mit Schmelzkleber hergestellten Bändchen 21 ohne weiteres Haftmittel eine sichere Verbindung zwischen der Stützwendel 15 und dem Außenschlauch 20 erzielt.

Figur 2 zeigt mit stufenweise am Umfang entfernten Teilen des Schlauchverbunds den wie voranstehend beschrieben hergestellten verstärkten Schlauch mit Stützwendel.

Figur 3 zeigt in einer ähnlichen Darstellung einen in vergleichbarer Weise hergestellten Schlauch, jedoch ohne Stützwendel und zusätzliche Bändchen, da hier der Außenschlauch 20 direkt auf den mit den Bändchen 6, 10 verstärkten Innenschlauch 2 aufgetragen ist und den zur Verstärkung des Innenschlauchs dienenden Bändchen verbunden ist.


**Patentansprüche**

1. Verfahren zur Herstellung eines verstärkten Schlauches, bei dem auf einen dünnwandigen, mit Verstärkungen versehenen und unter Innendruck stehenden Innenschlauch (14) ein aus thermoplastichem bzw. elastomerem Material bestehender Außenschlauch (20) aufgebracht wird, wobei die Verstärkungen (6, 10) mit dem Innenschlauch mittels eines wärmeaktivierbaren Klebers verbunden werden, dadurch gekennzeichnet, daß

a) auf dem Innenschlauch (2) in dessen Achsrichtung verlaufende, mit Textilfäden versehene Verstärkungsbändchen (6) aus dem wärmeaktivierbaren Kleber oder einem mit dem Kleber beschichteten Kunststoff als geschlossene Lage aufgebracht werden,

b) der zum Aktivieren des Klebers erwärmte Innenschlauch (2) mit niedrigem Innendruck von etwa 0.5-1 bar beaufschlagt durch eine Aufweitstrecke (Rohr 5) geführt und dabei an die Verstärkungsbändchen (6) angedrückt und mit diesen verklebt wird,

c) über die mit dem Innenschlauch verbundene erste Lage aus den in Achsrichtung verlaufenden Verstärkungsbändchen (6) eine zweite Lage gleichartiger Verstärkungsbändchen (10) wendelförmig gewickelt und mit den Verstärkungsbädchen (6) der ersten Lage unter Erwärmung (Heizzone 11) verbunden werden,

d) bevor der dieser Art verstärkte Innenschlauch (14) unter hohem Innendruck von bis zu 20 bar mit dem Außenschlauch (20) versehen wird.

2. Verfahren nach Anspruch 1, dadurch gekennzeichnet, daß auf die zweite Lage Verstärkungsbändchen (10) eine dritte Lage Bändchen gegenläufig zur zweiten Lage wendelförmig aufgewickelt wird.

3. Verfahren nach Anspruch 1 oder 2, dadurch gekennzeichnet, daß die zweite Lage und gegebenenfalls dritte Lage Bändchen beheizt werden.

4. Verfahren nach Anspruch 1 oder 2, gekennzeichnet durch die Verwendung von Verstärkungsbändchen (6, 10), die beidseitig mit Kleber beschichtet sind.

5. Verfahren nach einem der Ansprüche 1-4, dadurch gekennzeichnet, daß der mit Innendruck beaufschlagte Innenschlauch (2) unmittelbar im Anschluß an seine Extrusion mit den in axialer Richtung verlaufenden Verstärkungsbändchen (6) versehen wird und daß der Temperaturbereich der Klebefähigkeit des zur Herstellung bzw. Beschichtung der Verstärkungsbändchen (6) verwendeten Klebers (130-150 °C) auf die Temperatur abgestimmt ist, die der Innenschlauch (2) bei Austritt aus einer Extrusionsdüse (11) aufweist.

6. Verfahren nach Anspruch 5, gekennzeichnet durch die Verwendung eines Klebers für die Herstellung bzw. Beschichtung Verstärkungsbändchen (6), dessen Klebefestigkeit bei 110 °C erreicht wird.

7. Verfahren nach einem der Ansprüche 1-6, dadurch gekennzeichnet, daß über den mit den Verstärkungsbändchen (6, 10) verstärkten Innenschlauch (14) der Außenschlauch (20) extrudiert wird.

8. Verfahren nach einem der Ansprüche 1-6, dadurch gekennzeichnet, daß auf den mit den Verstärkungsbändchen (6, 10) verstärkten Innenschlauch (14) eine Stützwendel (15) mit axialem Abstand (16) der einzelnen Windungen zueinander gewickelt wird und die Stützwendel mit dem verstärkten Innenschlauch (14) fest verbunden wird.

9. Verfahren nach Anspruch 8, dadurch gekennzeichnet, daß die Stützwendel (15) außer mit dem verstärkten Innenschlauch (14) mit dem darüber extrudierten Außenschlauch (20) fest verbunden wird.

10. Verfahren nach Anspruch 8 oder 9, dadurch gekennzeichnet, daß zwischen der Stützwendel (15) und dem Außenschlauch (20) mit Textilfäden verstärkte Bändchen (21) die aus einem Kleber hergestellt oder mit einem Kleber versehen sind, in axialer Richtung auf die Stützwendel (15) aufgebracht werden und diese Bändchen die Stützwendel mit dem Außenschlauch (20) verbinden.

11. Verfahren nach Anspruch 10, dadurch gekennzeichnet, daß die Bändchen (21) auf die Stützwendel (15) straff aufgebracht werden.

12. Verwendung eines nach den Verfahren gemäß einem der Ansprüchen 8-11 hergestellten Schlauchs, durch dessen Innenschlauch (14) ein erstes Medium geleitet wird, zum Leiten eines zweiten Mediums durch den wendelförmigen Hohlraum (23) zwischen den Seiten der Stützwendel (15), dem verstärkten Innenschlauch (14) und dem durch weitere Bändchen (21) verstärkten Außenschlauch (20).

**Claims**

1. Process for producing a reinforced hose, an outer hose (20) made of thermoplastic or elastomeric material being applied on to a thin-walled inner hose (14) which is provided with reinforcements and is subjected to internal pressure, the reinforcements (6, 10) being connected to the inner hose by means of a heat-activatable adhesive, characterised in that

a) small reinforcing bands (6), provided with textile threads and consisting of the heat-activatable adhesive or a synthetic plastic material coated with the adhesive, are applied as a closed layer on to the inner hose (2), extending in the axial direction of the latter,

b) the inner hose (2) heated for activating the adhesive is conducted, subjected to a low internal pressure of about 0.5-1 bar, through an expanding section (tube 5) and in so doing is pressed on to the reinforcing bands (6) and adhesively secured thereto,

c) a second layer of similar small reinforcing bands (10) is wound helically over the first layer of axially disposed reinforcing bands (6) connected to the inner hose, and are connected to the reinforcing bands (6) of the first layer with heating (heating zone 11),

d) before the inner hose (14) reinforced in this way is provided with the outer hose (20) under a high internal pressure of up to 20 bar.

2. Process according to claim 1, characterised in that a third layer of small bands is wound helically on to the second layer of reinforcing bands (10) in a direction opposite to the second layer.

3. Process according to claim 1 or 2, characterised in that the second layer, and the third layer if appropriate, of bands are heated.

4. Process according to claim 1 or 2, characterised by the use of reinforcing bands (6, 10) which are coated on both sides with adhesive.

5. Process according to one of claims 1-4, characterised in that the inner hose (2) subjected to internal pressure is provided with the axially disposed reinforcing bands (6) immediately after its extrusion, and that the temperature range of the adhesiveness of the adhesive which is used for the production of or the coating of the reinforcing bands (6) (130-150 °C) is adjusted to the temperature which the inner hose (2) has on issuing from an extrusion nozzle (11).

6. Process according to claim 5, characterised by the use of an adhesive for the production of or the coating of the reinforcing bands (6) whose adhesion strength is attained at 110 °C.

7. Process according to one of claims 1-6, characterised in that the outer hose (20) is extruded over the inner hose (14) reinforced with the reinforcing bands (6, 10).

8. Process according to one of claims 1-6, characterised in that a supporting helix (15) is wound, with the individual turns spaced at axial spacing (16) from one another, on to the inner hose (14) reinforced with the reinforcing bands (6, 10), and the supporting helix is connected securely to the reinforced inner hose (14).

9. Process according to claim 8, characterised in that the supporting helix (15) is connected securely to the outer hose (20) extruded over the reinforced inner hose (14) as well as to the latter.

10. Process according to claim 8 or 9, characterised in that between the supporting helix (15) and the outer hose (20) small bands (21) reinforced with textile threads and made from an adhesive or provided with an adhesive are applied axially on to the supporting helix (15), and these bands connect the supporting helix to the outer hose (20).

11. Process according to claim 10, characterised in that the bands (21) are applied tightly on to the supporting helix (15).

12. Use of a hose which is produced by the process according to one of claims 8-11, and through whose inner hose (14) a first medium is conducted, for conducting a second medium through the helically shaped hollow space (23) between the sides of the supporting helix (15), the reinforced inner hose (14), and the outer hose (20) reinforced by further bands (21).

**Revendications**

1. Procédé pour fabriquer un tuyau renforcé, selon lequel on dispose un tuyau externe (20) constitué en une matière thermoplastique ou élastomère, sur un tuyau interne (14) à paroi mince, comportant des éléments de renforcement et soumis à une pression interne, les éléments de renforcement (6, 10) étant reliés au tuyau interne au moyen d'une colle pouvant être activée sous l'action de la chaleur, caractérisé par le fait que

a) on dispose, sous la forme d'une couche fermée, des bandelettes de renforcement (6) s'étendant sur le tuyau interne (2) dans la direction axiale de ce dernier et munies de fils textiles, et comportant de la colle pouvant être activée sous l'action de la chaleur ou bien une matière plastique enduite avec la colle,

b) on guide à travers une section d'élargissement (tube 5) le tuyau interne (2) chauffé de manière à activer la colle et qui est soumis à une pression interne faible d'environ 0,5-1 bar et on l'applique sous pression sur les bandelettes de renforcement (6) et on le colle sur ces dernières,

c) sur la première couche, reliée au tuyau interne, des bandelettes de renforcement (6) s'étendant suivant la direction axiale, on enroule sous forme hélicoïdale une seconde couche de bandelettes de renforcement identiques (10) et on les relie aux bandelettes de renforcement (6) de la première couche en appliquant un chauffage (zone de chauffage 11),

d) avant d'équiper le tuyau interne (14), renforcé de cette manière, avec le tuyau externe (20), on prévoit l'application d'une pression interne élevée allant jusqu'à 20 bars.

2. Procédé selon la revendication 1, caractérisé en ce que l'on enroule sous forme hélicoïdale une troisième couche de bandelettes sur la seconde couche de bandelettes de renforcement (10), en sens opposé par rapport à la seconde couche.

3. Procédé selon la revendication 1 ou 2, caractérisé en ce qu'on chauffe la seconde couche et éventuellement la troisième couche de bandelettes.

4. Procédé selon la revendication 1 ou 2, caractérisé par l'utilisation de bandelettes de renforcement (6, 10), qui sont enduites de colle sur leurs deux faces.

5. Procédé selon l'une des revendications 1-4, caractérisé en ce que l'on installe les bandelettes de renforcement (6) s'étendant suivant la direction axiale, sur le tuyau interne (2) chargé par une pression intérieure, aussitôt après l'extrusion de ce dernier et que la plage des températures (130-150 °C), dans laquelle la colle utilisée pour fabriquer ou recouvrir les bandelettes de renforcement (6) présente sa capacité d'adhérence, est réglée à la température que le tuyau interne (2) possède à la sortie d'une buse d'extrusion (11).

6. Procédé selon la revendication 5, caractérisé par l'utilisation d'une colle employée pour la fabrication ou l'enduction des bandelettes de renforcement (6) et dont le durcissement est obtenu à 110 °C.

7. Procédé selon l'une des revendications 1-6, caractérisé en ce que l'on réalise l'extrusion du tuyau externe (20) par dessus le tuyau interne (14) renforcé par des bandelettes de renforcement (6, 10).

8. Procédé selon l'une des revendications 1-6, caractérisé en ce qu'on enroule sur le tuyau interne (14) renforcé par les bandelettes de renforcement (6, 10), un élément hélicoïdal de support (15) selon différentes spires écartées d'une distance axiale (16) et qu'on relie fermement l'élément hélicoïdal de support au tuyau interne renforcé (14).

9. Procédé selon la revendication 8, caractérisé en ce qu'on relie fermement l'élément hélicoïdal de support (15) non seulement au tuyau interne renforcé (14), mais également au tuyau externe (20) obtenu par extrusion.

10. Procédé selon la revendication 8 ou 9, caractérisé en ce que l'on dispose dans la direction axiale sur l'élément hélicoïdal de support (15) et entre cet élément (15) et le tuyau externe (20), des bandelettes (21) renforcées par des fils textiles et qui sont réalisées avec une colle ou sont garnies de colle, et que ces bandelettes relient l'élément hélicoïdal de support au tuyau externe (20).

11. Procédé selon la revendication 10, caractérisé en ce que l'on dispose les bandelettes (21) en les tendant fortement sur l'élément hélicoïdal de support (15).

12. Utilisation d'un tuyau fabriqué selon le procédé conforme à l'une des revendications 8-11 et à travers le tuyau interne (14) duquel circule un premier fluide, pour véhiculer un second fluide dans l'espace (23) de forme hélicoïdale présent entre les côtés de l'élément hélicoïdal de support (15), le tuyau interne renforcé (14) et le tuyau externe (20) renforcé par d'autres bandelettes (21).

Fig.1

Fig. 2

Fig. 3

Fig. 4

Fig. 5